# EUROPEAN PATENT APPLICATION

(11) **EP 2 045 501 A1**
(43) Date of publication of application: **08.04.2009**
(21) Application number: 08165692.8
(22) Date of filing: 02.10.2008
(51) Int. Cl.: F16L 33/01, F16L 33/16, F16L 33/207

(54) **Connecting construction**

(30) Priority: 02.10.2007 NL 2000894
(71) Applicant: Pipelife Nederland B.V., 1601 MA Enkhuizen (NL)
(72) Inventor: Cloos, Peter Jeroen, 1602 HZ Enkhuizen (NL); Dalmolen, Lambertus Gerrit Peter, 1019 SE Amsterdam (NL)
(74) Representative: van Westenbrugge, Andries

(57) **Abstract**

The present invention relates to a connecting construction between a pipe (1) and a coupling (5), which pipe comprises an internal lining (2) and a fibre reinforcement layer (3) surrounding the lining. The coupling has a coupling piece (7) having an external clamping surface (9), a sleeve (8) which surrounds the coupling piece and has an internal clamping surface (15) which is shaped in accordance with the external clamping surface of the coupling piece, and also a coupling end interacting with the coupling piece. The fibre reinforcement layer is secured between the coupling piece and the sleeve. The sleeve has a mount (17) which is remote from the coupling end (12) and the internal support surface (25) of which extends so as to widen in the direction away from the coupling end.

## Description

The invention relates to a coupling construction between a pipe and a coupling, which pipe comprises an internal lining and a fibre reinforcement layer surrounding the lining, and which coupling comprises a coupling piece having an external clamping surface, a sleeve which surrounds the coupling piece and has an internal clamping surface which is shaped in accordance with the external clamping surface of the coupling piece, and also a coupling end interacting with the coupling piece, at least the fibre reinforcement layer being secured between the coupling piece and the sleeve and the coupling end being located in proximity to the pipe end and the sleeve having a mount which is remote from the coupling end and the internal support surface of which extends so as to widen in the direction away from the coupling end.

A coupling construction of this type is known from US-A-3,118,691. This construction can be used in particular in pipes which are exposed to relatively high pressure. The wedge-shaped clamping-in which occurs between the clamping surface of the coupling piece and the internal clamping surface of the sleeve brings about a sturdy connection between the pipe and the coupling. This wedge-shaped clamping-in is obtained by sliding the sleeve and the coupling end onto each other and fastening them to each other, for example by means of a screw fastening or a bayonet fastening. The pipe itself is constructed so as to withstand the relatively high internal excess pressure.

In that connection, it is known to receive in the pipes a reinforcement layer consisting of fibres having high strength and high rigidity. Pipes constructed in this way withstand pressures of a few hundred bar, and display very little stretch at such elevated pressures. Although pipes of this type are highly satisfactory, the costs thereof are relatively high in view of the nature of the fibres which have to be used in the reinforcement layer. As soon as the pressures which the pipes have to withstand are lower, pipes of this type are not only over oversized, but in fact also costly.

In that connection, it would be desirable to use in the known coupling construction a pipe, the reinforcement layer of which consists of traditional fibres which display low strength and relatively high stretch. However, when pipes of this type are exposed to internal excess pressure, the diameter thereof increases in such a way that the connection to the coupling presents problems and can lead to damage in the pipe. That is highly undesirable, in view of the fact that such damage can ultimately lead to failure of the coupling construction.

The object of the invention is therefore to provide a coupling construction of the type mentioned at the outset that is also suitable for pipes, the reinforcement layer of which has fibres having relatively low strength and relatively higher stretch than for example aramid fibres. That object is achieved in that, viewed in a radial cross section of the sleeve, the difference between the minimum radius and the maximum radius of the internal support surface of the sleeve is at least one order of magnitude smaller than the axial dimension of that internal support surface of the sleeve.

In the coupling construction according to the invention, the coupling is embodied so as to be able to offer support to the portion of the pipe that is clamped-in in the coupling by means of the wedge-shaped clamping-in. This support enters into effect as soon as the pipe increases in diameter as a result of being filled by increasing internal excess pressure. The support or mount has for this purpose a shape which widens in such a way that, viewed from the clamping-in, the pipe can be supported uniformly over that portion thereof that increases in diameter, starting from the clamping-in. This ensures that the pipe, the diameter of which has increased, is not locally exposed to high strains and marked deformations, thus reducing the risk of damage to the pipe as the diameter thereof increases. The internal shape of the mount can for example be that of a bottleneck. However, it is also possible to use an internal trumpet shape. From the point of view of production technology, an internal tapered or conical embodiment is however the simplest.

In particular, the connecting construction can be embodied in such a way that the minimum radius of the internal support surface of the sleeve is substantially equal to the external diameter of the pressureless pipe. Furthermore, provision can be made for the maximum radius of the internal surface of the sleeve to be substantially equal to the external diameter of the pipe in which the maximum operating pressure prevails. This ensures that the widening portion of the pipe is well supported by the internal support surface of the sleeve, whereas outside the connecting construction the pipe has its normal external diameter under the operating pressure in question. This prevents any constriction of the pipe at the location of the end edge of the coupling.

Furthermore, provision can be made for the axial dimension of the internal support surface of the sleeve to be between 0.5 and 5 times the diameter of the pipe under maximum operating pressure.

As stated hereinbefore, the coupling construction is particularly suitable for pipes, the reinforcement layer of which has fibres which are relatively less strong and relatively less rigid than for example aramid fibres. In particular, the coupling construction is suitable for pipes in which the fibre reinforcement layer comprises synthetic fibres, the modulus of elasticity of which is less than 50 GPa. In particular, the fibre reinforcement layer can comprise polyester fibres.

The length of the mount must be such as to enable said mount gradually to accommodate the change in diameter of the pipe. After all, if the mount were too short, excessively marked deformations and high strains might still occur in the pipe. According to the invention, the aforementioned ratio is for this purpose selected between the difference in the minimum radius and the maximum radius of the internal support surface of the sleeve at least and the axial dimension of that internal support surface of the sleeve.

The desired ratio can also be obtained if the axial dimension of the internal support surface of the sleeve is of the same order of magnitude as an external diameter of the sleeve. According to still another possibility, that can be achieved in that the axial dimension of the internal support surface of the sleeve is at least equal to half the axial dimension of the sleeve.

The clamping surfaces can be embodied in various ways. According to a first possibility, the clamping surfaces can be correspondingly wedge-shaped. Furthermore, the external surface of the coupling piece can have at least two sections having various wedge angles and the internal surface of the sleeve can have two corresponding sections having various wedge angles.

In this variant of the coupling construction according to the invention, the coupling piece has various sections which also serve various purposes. The first section, which is used for sliding thereover the layer or layers which has or have to be clamped-in, can have a relatively small wedge angle in order to facilitate that sliding-on. The other section can however have a larger wedge angle, suitable for clamping-in the layer or layers without requiring too much displacement for this purpose. This allows the conflicting requirements of the attachment of the ring piece, on the one hand, and the clamping-in of the ring piece and the respective lower bottom layers, on the other hand, to be reconciled with each other. The great advantage of this is that no supplementary measures have to be taken in conjunction with the attachment of the ring piece and/or in conjunction with obtaining the desired clamping-in.

The most important layer which has to be clamped-in is the fibre reinforcement layer. This fibre reinforcement layer plays a decisive part in the forwarding of the tensile strains in the pipe. In addition, the pipe also has an external covering layer, although that is not always necessary. This external covering layer can be removed from the fibre reinforcement layer over the portion of said fibre reinforcement layer that has to be clamped-in. However, such a course of events is not always necessary, and in that connection, in a pipe comprising an external covering layer, the aforementioned covering layer can be clamped-in, together with the fibre reinforcement layer, between the ring piece and the sleeve.

The coupling piece can be a separate component which is slid around a portion having a relatively small diameter of the coupling end. In that case, the internal covering layer of the pipe can for example be received between the coupling piece and the portion having a relatively small diameter of the coupling end. The reinforcement layer and any external covering run over the outer edge of the coupling piece, and are clamped-in between that coupling piece and the opposing surface of the sleeve.

In conjunction with obtaining the desired clamping-in, the internal surface of the sleeve is also adapted in a suitable manner. Although the section of the sleeve having a small wedge angle, which connects to the corresponding portion of the ring piece having a small wedge angle, is not per se necessary in order to obtain the desired sliding of the fibre reinforcement layer onto the ring piece, it is nevertheless useful also to adapt the internal surface of the sleeve thereto, in order to be able usefully to use the, albeit minor, wedge effect which these surfaces have for clamping-in the fibre reinforcement layer.

The various sections of the ring piece can have various angles of inclination, preference being given to an embodiment in which the front portion of the ring piece has an angle of inclination of between 5 and 10 degrees. In that connection, the rear portion can have an angle of inclination of between 10 and 20 degrees. However, most preferable is an embodiment in which the front portion has an angle of inclination of approximately 7 degrees and the rear portion has an angle of inclination of approximately 14 degrees.

In order further to consolidate the clamping-in, the ring piece can have external teeth. Preference is in this case given to an embodiment in which the teeth are saw-tooth-shaped, in such a way that the inclination of the saw-tooth shape having the smallest angle of inclination is directed forward. Likewise, the teeth can run helically around the ring piece, in such a way that rotation of the ring piece allows axial displacement thereof.

Furthermore, provision can be made for the ring piece to be provided with a break, in such a way that the diameter thereof is adaptable by way of resilient bending of the ring piece. Preferably, the break is embodied as a section intersecting the centre line of the ring piece. This break allows the ring piece to exert a better clamping effect on the fibre reinforcement layer during the clamping-in thereof.

According to a further variant, the coupling piece can however be formed in one piece with the coupling end. In that case, all layers of the pipes run over the external surface of the coupling piece. The sleeve is in this case clamped radially inward to the layers and the coupling piece. Mutually facing surfaces of the coupling piece and sleeve have in that case preferably saw-tooth-shaped profiles.

The radial cross section of the sleeve referred to hereinbefore must be understood as the cross section which coincides with a radial plane within which the centre line of the sleeve is located.

Reference is made to the prior art such as is known from Netherlands patent specification 1,013,798. This publication relates to a coupling construction of a different type using an external sleeve consisting of two shell halves which are clamped to each other by bolts. The connection between the pipe and these shell halves is also brought about by means of teeth. The free end of the shell halves has a somewhat widening internal support surface taking up just a small portion of the axial dimension of the sleeve.

The invention will now be described in greater detail with reference to an exemplary embodiment represented in the figures, in which:
Figure 1 shows a coupling construction according to the invention between two pipes.
Figure 2 shows the enlarged detail II from Figure 1.
Figure 3 shows the ring piece such as is used in the coupling construction according to the invention.
Figure 4 shows the enlarged detail IV from Figure 3
Figure 5 shows the sleeve such as is used in the coupling construction according to the invention.
Figure 6 shows an alternative embodiment of the coupling construction.
Figure 7 shows the coupling construction according to Figure 1, internal excess pressure prevailing in the pipe 21.

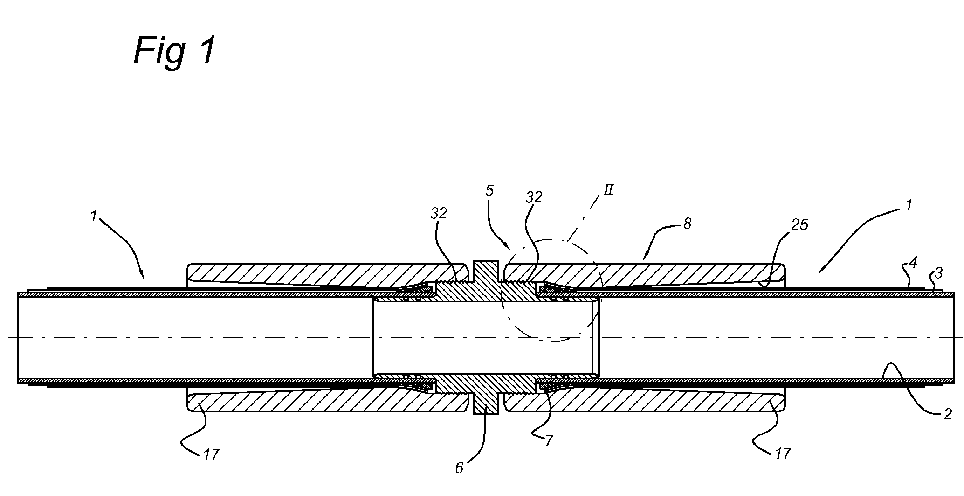

In Figure 1, use is made of a double coupling construction according to the invention. This coupling construction is symmetrical, so that merely one half thereof will be described. The coupling construction is located between two pipes 1 each having an internal lining 2 and a reinforcement layer 3 surrounding this lining 2. Furthermore, each pipe 1 has an external covering layer 4.

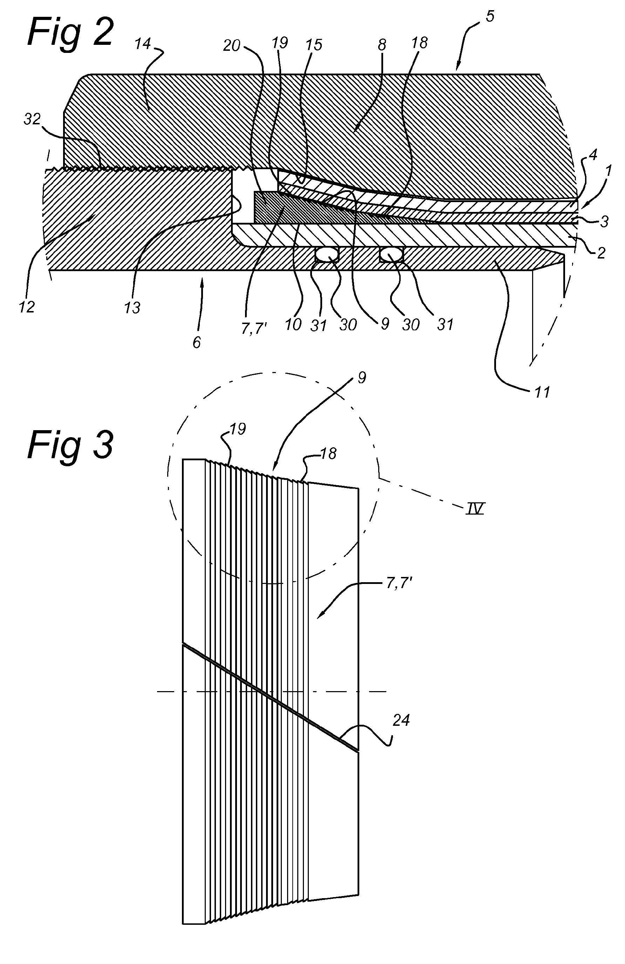

The coupling construction also consists of a coupling 5 comprising the internal tubular piece 6, the coupling piece 7 and the sleeve 8. The coupling piece 7 has an external wedge-shaped surface 9 and an internal cylindrical surface 10 as represented in Figure 2. At one end, the coupling piece 7 also has an external cylindrical portion 20. The tubular piece 6 has a cylindrical portion 11 having a relatively small external diameter over which the internal covering layer 2 is rolled up. O-rings 30, received in external grooves 31 of the cylindrical portion 11 having a relatively small diameter of the tubular piece 6, ensure the seal. The tubular piece 6 also has a cylindrical portion 12 having a relatively large external diameter; provided between these cylindrical portions 11, 12 is a shoulder 13 against which the end of the internal covering layer 2 rests.

The sleeve 8 has a cylindrical portion 14 which is fastened by means of the screw thread fastening 32 to the cylindrical portion 12 having a relatively large diameter of the tubular piece 6. Other fastenings are however also conceivable, such as a bayonet fastening. Adjacent thereto, the sleeve 8 has an internal surface 15 having a wedge shape corresponding to the wedge shape of the surface 9 of the coupling piece 7. Provided adjacent thereto is a cylindrical portion 16 having a fairly small axial length, and finally a widening portion 17.

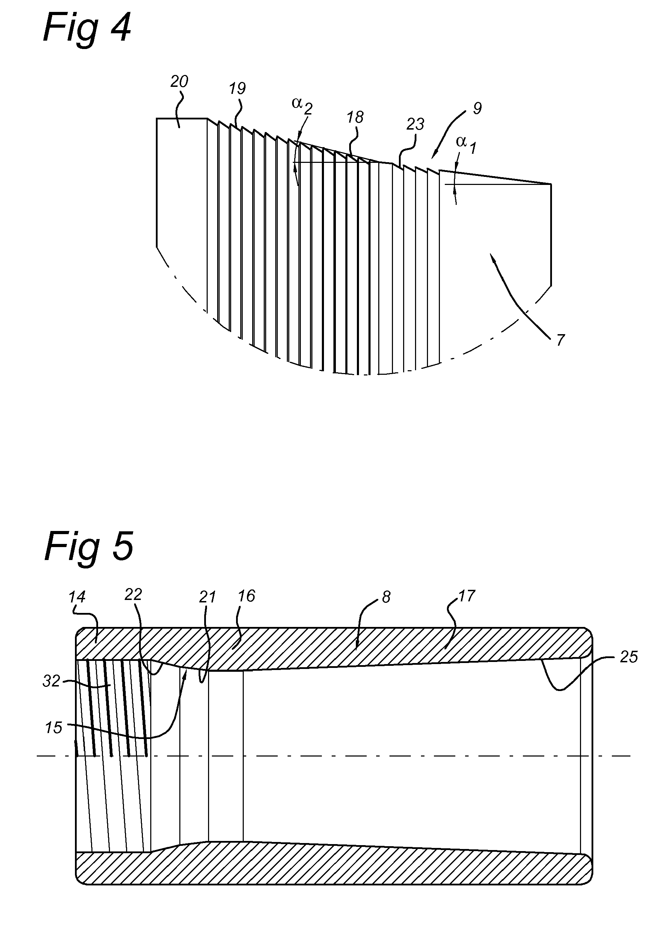

The wedge-shaped surface 9 of the coupling piece 7, which is also represented in Figures 3 and 4, has two sections 18, 19 having differing wedge angles alpha1 and alpha2 respectively. The angle alpha1 is smaller than the angle alpha2, and is in particular half said value, for example 7 degrees and 14 degrees respectively.

During the production of the connecting construction according to the invention, the ring piece comprising the section 18, which has the relatively small wedge angle alpha1, is slid between the reinforcement layer 3 and the internal lining 2. Subsequently, the tubular piece 6 is slid in the internal lining 2. Afterwards, the sleeve 8 is slid over the external covering layer 1 and the reinforcement layer 3, wherein the wedge-shaped surface 15 of the sleeve comes to lie opposite the wedge-shaped surface 9 of the coupling piece 7. The sleeve 8 also has in that connection two sections 21 and 22 respectively, which lie opposite the corresponding sections 18 and 19 respectively of the coupling piece 7.

The sliding-on of the reinforcement layer 3 over the section 18 of the coupling piece 7 is fairly straightforward, in view of the small wedge angle thereof. The securing of the reinforcement layer 3 is however carried out mainly at the location of the other section 19 which has a relatively large wedge angle. The securing can then also be carried out without the reinforcement layer 3 having to slide back excessively far before the final clamping effect is obtained.

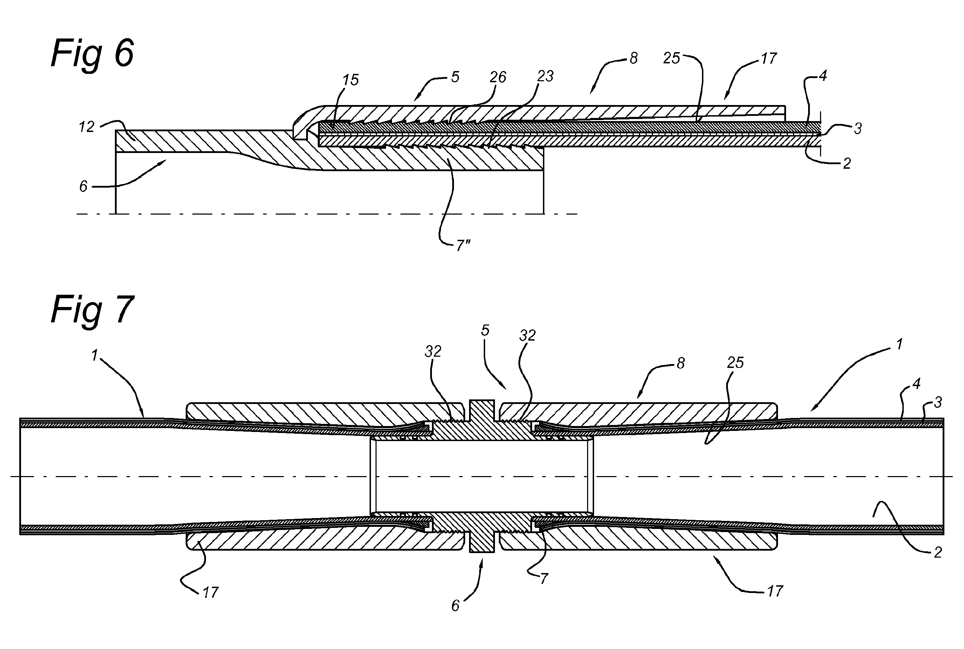

According to the invention, the sleeve 8 has a somewhat widening portion or mount 17. This portion 17 supports the pipe 1 when said pipe is placed under pressure. The pipe 1 can then gradually expand from the cylindrical portion 16 up to the diameter pertaining to the pressure in question. As a result of this gradually widening shape of the mount 17, the pipe, the diameter of which has increased, is uniformly supported, in such a way that damage and excessive tensions and deformations are avoided: see Figure 7.

The coupling piece 7 has external teeth 24 having the shape of a saw-tooth. The slight inclination of the saw-tooth shape is directed toward the pipe 1, so as to facilitate sliding-on thereof. Furthermore, the saw-tooth can extend helically, in such a way that adaptation can be carried out by rotating the coupling piece 7 and the pipe 1 with respect to each other. Furthermore, the coupling piece 7 has an oblique section 24 which allows the diameter of the coupling piece 7 to be adapted somewhat during the clamping-in.

In the variant of Figure 6, the coupling piece 7" is formed in one piece with the tubular piece 6. In other words, the coupling piece 7" is located between the portion 12 having a relatively large diameter and the portion 11 having a relatively small diameter of the tubular piece 6. In this embodiment, the external surface 9 of the coupling piece 7" is embodied with a saw-tooth-shaped profile 23. The sleeve 8 has an internal saw-tooth-shaped profile 26. All layers 2, 3 and 4 of the pipe 1 are now clamped-in between the saw-tooth-shaped profiles 23, 26 of that coupling piece 7" and of the sleeve 8. In that connection, the sleeve 8 can for example be clamped by crimping to the aforementioned layers and the coupling piece 7". In this case too, the coupling piece 8 has a mount 17 having an internal widening support surface 25.

## Claims

1. Connecting construction between a pipe (1) and a coupling (5), which pipe (1) comprises an internal lining (2) and a fibre reinforcement layer (3) surrounding the lining (2), and which coupling (5) comprises a coupling piece (7) having an external clamping surface (9), a sleeve (8) which surrounds the coupling piece (7) and has an internal clamping surface (15) which is shaped in accordance with the external clamping surface (9) of the coupling piece (7), and also a coupling end (12) interacting with the coupling piece (7), at least the fibre reinforcement layer (3) being secured between the coupling piece (7) and the sleeve (8), the coupling end (12) being located in proximity to the pipe end and the sleeve (8) having a mount (17) which is remote from the coupling end (12) and the internal support surface (25) of which extends so as to widen in the direction away from the coupling end (12) **characterized in that**, viewed in a radial cross section of the sleeve (8), the difference in the minimum radius and the maximum radius of the internal support surface (25) of the sleeve (8) is at least one order of magnitude smaller than the axial dimension of that internal support surface (25) of the sleeve (8).

2. Connecting construction according to Claim 1, wherein the minimum radius of the internal support surface (25) of the sleeve (8) is substantially equal to the external diameter of the pressureless pipe (1).

3. Connecting construction according to one of the preceding claims, wherein the maximum radius of the internal surface (25) of the sleeve (8) is substantially equal to the external diameter of the pipe (1) in which the maximum operating pressure prevails.

4. Connecting construction according to one of the preceding claims, wherein the axial dimension of the internal support surface (25) of the sleeve (8) is between 0.5 and 5 times the diameter of the pipe under maximum operating pressure.

5. Connecting construction according to one of the preceding claims, wherein the internal support surface (25) of the sleeve (8) connects to the internal clamping surface (15) of the sleeve (8).

6. Connecting construction according to one of the preceding claims, wherein the internal clamping surface (15) of the sleeve (8) and the internal support surface (25) of the sleeve (8) enclose a cylindrically shaped internal transition surface (21).

7. Connecting construction according to one of the preceding claims, wherein the external clamping surface (9) of the coupling piece (7) and the internal clamping surface (15) of the sleeve (8) are correspondingly wedge-shaped.

8. Connecting construction according to one of the preceding claims, wherein the fibre reinforcement layer (3) comprises synthetic fibres, the modulus of elasticity of which is less than 50 GPa, such as polyester fibres.

9. Connecting construction according to one of the preceding claims, wherein the coupling piece (7) comprises a loose coupling ring (7') and the coupling end (12) is provided with a tubular piece (6) which extends through the coupling ring (7'), in such a way that the lining is located between the tubular piece (6) and the coupling ring (7').

10. Connecting construction according to one of the preceding claims, wherein the sleeve (8) and the coupling piece (12) are fastened to each other, for example by means of a screw thread fastening (32), a bayonet fastening, and the like.

11. Connecting construction according to one of claims 1 - 8, wherein the coupling piece (7") is formed in one piece with the coupling end (12), and all layers of the pipe (1) are received between the coupling piece (7") and the sleeve (8).

12. Connecting construction according to Claim 11, wherein the coupling piece (7") has external teeth (23).

13. Connecting construction according to Claim 12, wherein the teeth (23) are saw-tooth-shaped, in such a way that the inclination of the saw-tooth shape having the smallest angle of inclination is directed forward.

14. Connecting construction according to Claim 12 or 13, wherein the teeth (23) run helically around the coupling piece (7").

15. Connecting construction according to one of the preceding claims, wherein the pipe (1) comprises an external covering layer (4), which covering layer (4) is clamped-in between the coupling piece (7) and the sleeve (8).
